# EUROPEAN PATENT SPECIFICATION

(11) **EP 3 381 297 B1**
(45) Date of publication and mention of the grant of the patent: **30.10.2019**
(21) Application number: 18163846.1
(22) Date of filing: 26.03.2018
(51) Int. Cl.: A23G 9/28, A23G 1/20, A23G 3/20, A23G 3/02

(54) **DEVICE FOR DISPENSING CONFECTIONERY CREAMS**
VORRICHTUNG ZUR ABGABE VON SÜSSWARENCREMES
DISPOSITIF DE DISTRIBUTION DE CRÈMES DE CONFISERIE

(30) Priority: 30.03.2017 IT 201700035280
(43) Date of publication of application: 03.10.2018
(73) Proprietor: Selmi S.r.l., 12069 Santa Vittoria d'Alba (Cuneo) (IT)
(72) Inventor: SELMI, Paolo, I-12069 Santa Vittoria d'Alba (CN) (IT)
(74) Representative: Frontoni, Stefano

(56) References cited:
- US-A- 1 696 845
- US-A- 2 597 175
- US-A- 3 795 352
- US-A1- 2008 311 237
- US-A1- 2015 313 252

## Description

### Field of the invention

The present invention is strictly defined by the claims and relates to a device for dispensing confectionery creams.

In particular, the present invention relates to a device of the type comprising:
- an inlet and an outlet;
- at least one chamber for collecting the cream, where a piston is mobile within said chamber in a first direction for intake of said cream into the device, through said inlet, and in a second, opposite, direction, for delivery of said cream through said outlet; and
- a cylindrical valve member, set within a corresponding cylindrical seat, which may be configured between a first condition, where said chamber is set in communication with said inlet and is instead isolated from said outlet, and a second condition, where said chamber is set in communication with said outlet and is isolated from said inlet.

### Prior art

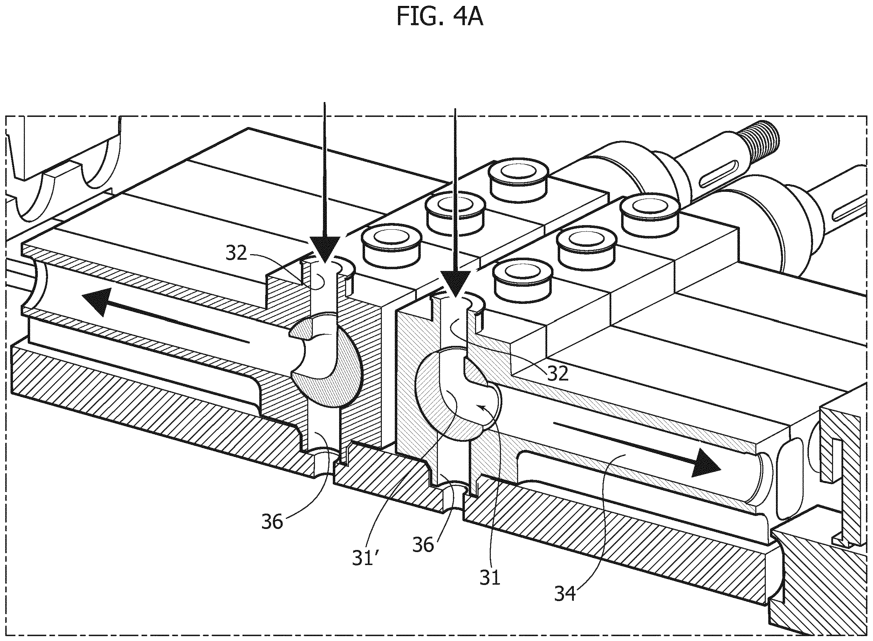

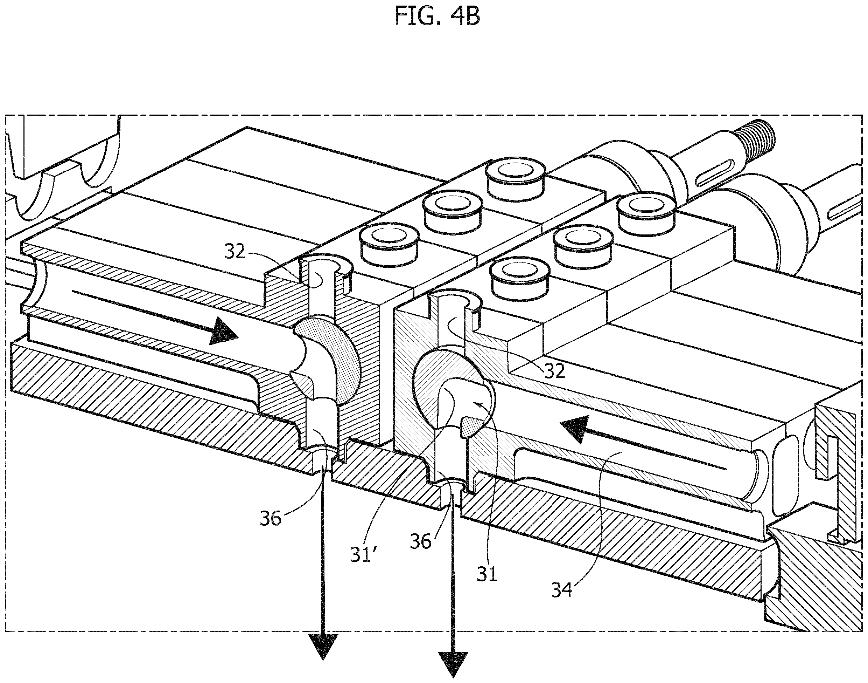

Figures 4A and 4B illustrate a device according to the prior art.

In the above device, the valve member 31 has inside it a series of ducts 31' with elbow-shaped profile for passage of the cream. The valve member 31 is able to turn within its seat to set itself with a first orientation (Figure 4A), in which the ducts 31' set the inlets 32 in connection with the collection chambers 34, and a second orientation, in which the ducts set, instead, the collection chambers 34 in communication with the outlets 36 (Figure 4B).

The present applicant has found that the solution referred to above can lead to some drawbacks in the use of the device with confectionery creams that have a content of solid material in granules, for example ground hazelnuts, wallnuts, and equivalent products.

It has in fact been noted that residue of the aforesaid solid material tends to accumulate within the valve member described, with the risk, in the long run, of jamming it in its movement of rotation and damaging it. US1696845A and US2008/311237A1 describe prior art that may be of some interest as technical background.

### Object and summary of the invention

The object of the present invention is to provide a dispensing device that will solve the aforesaid drawback and, more in general, that will be improved as compared to the known solutions.

The above object is achieved via a device having the characteristics specified in Claim 1.

The claims form an integral part of the technical teaching provided herein in relation to the invention.

### Brief description of the drawings and detailed description of at least one embodiment of the invention

Further characteristics and advantages of the invention will emerge clearly from the ensuing description, with reference to the annexed drawings, which are provided purely by way of non-limiting example and in which:
- Figure 1 is an axonometric view of an embodiment of the device described herein;
- Figure 2A illustrates the device of Figure 1 partially sectioned, in a first operating condition;
- Figure 2B illustrates the device of Figure 2 in a second operating condition;
- Figure 3 is an axonometric view of the valve member of the device of Figure 1; and
- Figures 4A and 4B illustrate a dispensing device of the prior art, according to a view corresponding to that of Figures 2A and 2B.

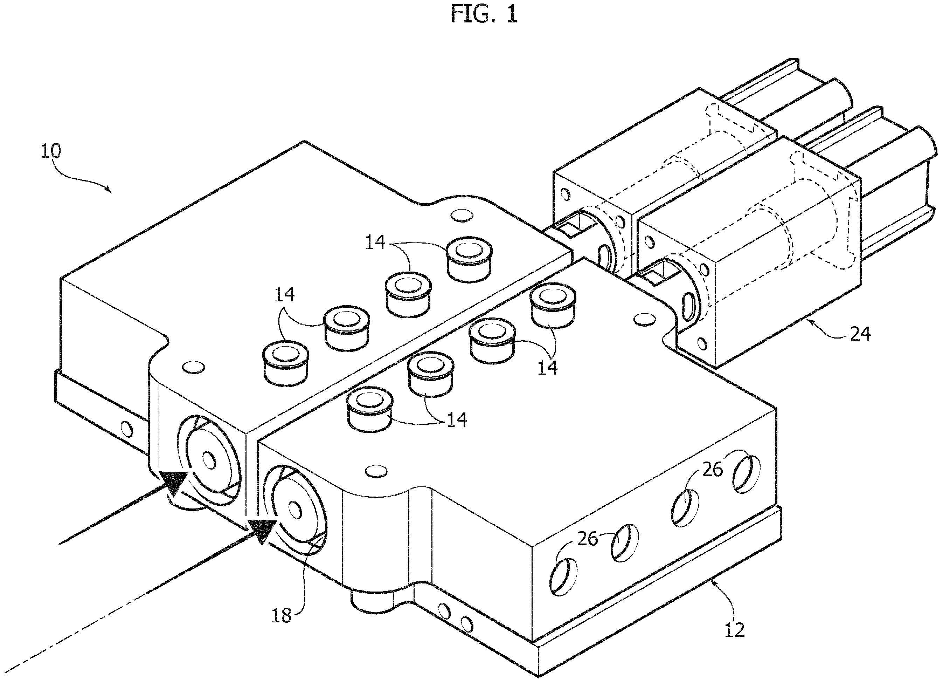

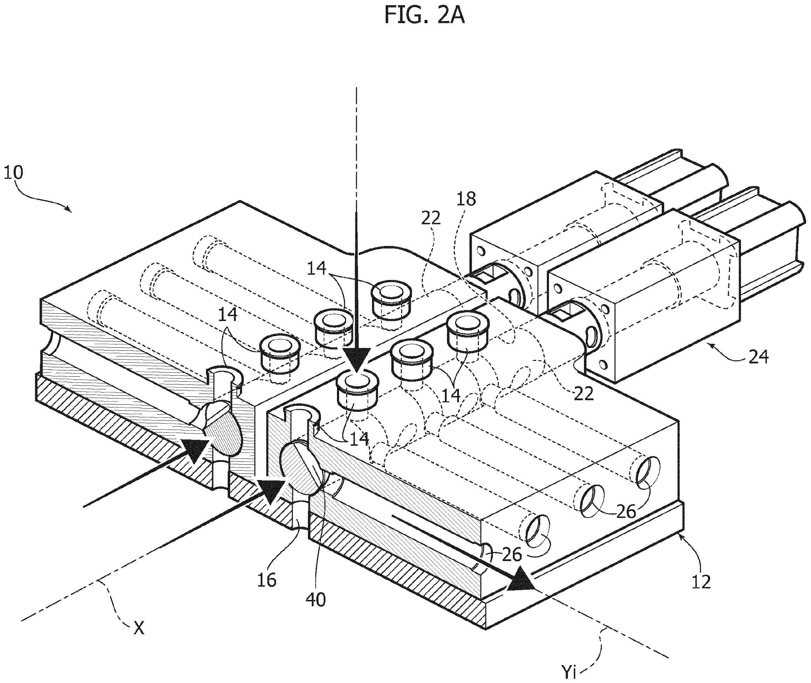

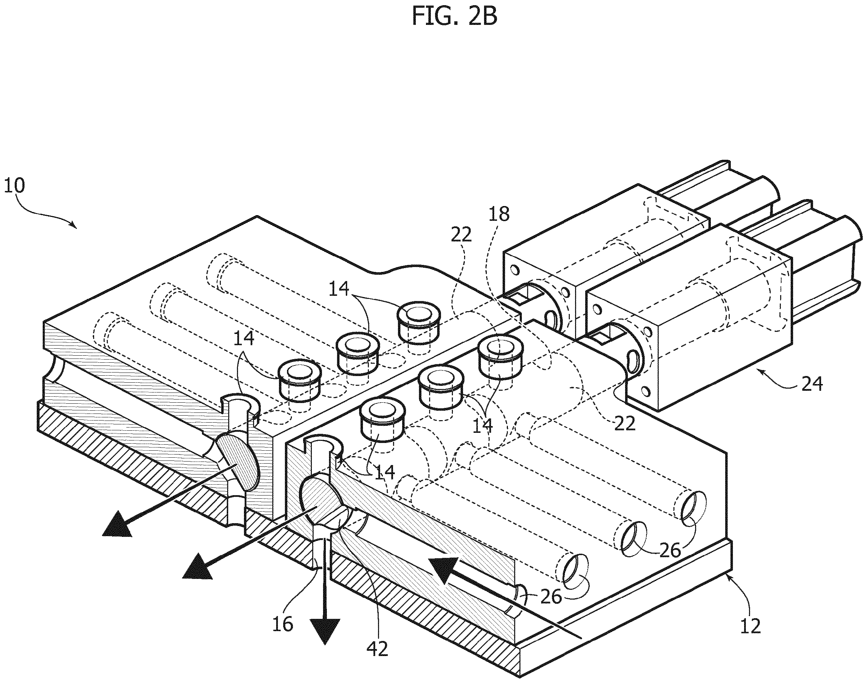

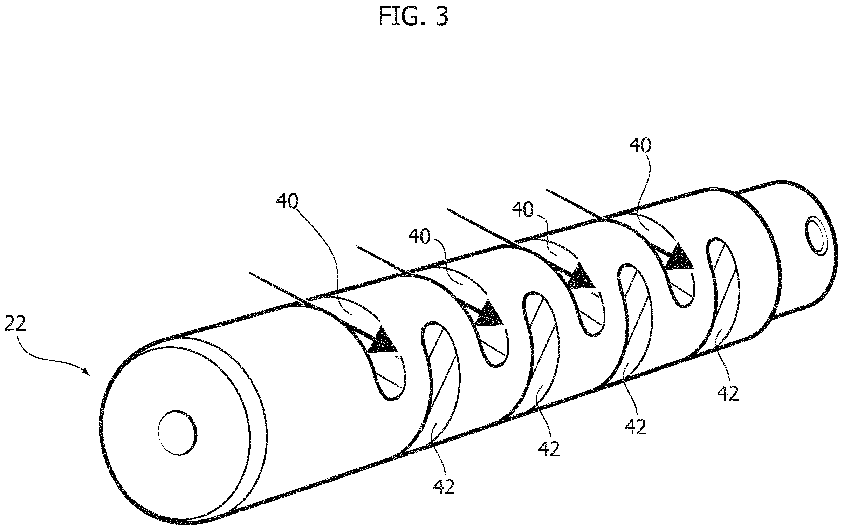

With reference to Figures 1, 2A-2B, and 3, the device described herein, designated as a whole in the figures by the reference number 10, comprises a block 12 that defines, at the top, a series of inlet mouths 14, and, at the bottom, a series of outlet mouths 16, preferably aligned to the inlet mouths 14, vertically, in respective directions Zi. Clearly, the number of inlet mouths and outlet mouths may vary according to the specific needs of the various applications. The two series of mouths both extend in a direction X, in a horizontal plane of the block 12.

Within the block 12, provided between the inlet mouths 14 and the outlet mouths 16 is a cylindrical seat 18, mounted mobile within which is a valve member 22 having a corresponding shape. In particular, the seat 18 extends horizontally in the same direction X as that along which the inlet mouths 14 and the outlet mouths 16 are arranged.

The valve member 22 is axially mobile, in translation, in the above direction, driven by a motor-driven linear actuator 24.

The block 12 then has a series of cylindrical chambers 26 that extend horizontally in respective directions Yi orthogonal to the direction X of the cylindrical seat 18, each giving out into the aforesaid seat, in a position where a pair of the inlet mouths 14 and outlet mouths 16 are located.

Present inside each chamber 26 is a piston (not visible in the figures), which is designed to be driven according to a reciprocating motion of translation, for intake and expulsion of the cream into and from the chamber, as will be seen in what follows.

The valve member 22 has on its outer surface, for each pair of the mouths 14 and 16, two recesses 40 and 42, the first one being designed to set the chamber 26 in communication with the inlet mouth 14, and the second one being designed to set the chamber 26 in communication with the outlet mouth 16. The two recesses 40 and 42 are obtained in respective planes transverse to the geometrical axis of the member 22 that are located in different positions along the aforesaid geometrical axis.

The two recesses 40 and 42 are such as to extend down to a depth that does not reach the geometrical axis of the member 22 so as to be superficial or in any case shallow. In various preferred embodiments, these recesses are obtained by milling, along a cutting plane secant with respect to the circular cross section of the member 22.

With reference to the embodiment illustrated, the two recesses 40 and 42 have two different orientations, referring to the cross section of the member 22, preferably offset by approximately 90°. It will be noted that, in the configuration illustrated, the cutting plane by which each of the two recesses 40 and 42 is defined is inclined by an angle β with respect to the horizontal axis of the corresponding chamber 26 (i.e., with respect to the axis Yi along which this chamber extends), which is approximately +135° for the recess 40 (defining for this cutting plane an orientation of approximately 45° with respect to the axes Zi and Yi) and approximately -135° for the recess 42 (once again defining for this cutting plane an orientation of approximately 45° with respect to the axes Zi and Yi).

In operation, the valve member 22, in a first position of its own, will set the recess 40 in a position corresponding to the inlet mouth 14, thus setting it in communication with the collection chamber 26, and, in a second position of its own, will instead set the recess 42 in a position corresponding to the outlet mouth 16, thus setting the chamber 26 in connection with the latter.

Operation of the device presented herein is described in what follows.

In the condition where the device is installed, the inlet mouths 14 are connected to a tank of confectionery cream.

To carry out a step of dispensing of the cream, the device 10 first carries out intake of the cream into the chambers 26.

This operation envisages setting the valve member 22 in the position where the recesses 40 are aligned with the inlet mouths 14 so as to set the mouths in connection with the corresponding chambers 26. At this point, the pistons of the above chambers, which come to occupy the end-of-travel position up against the member 22, are moved in the opposite direction, away from the aforesaid member, to draw the cream into the respective chamber.

At the end of this operation, the cream to be dispensed is collected within the various chambers 26.

At this point, the device carries out the operation of dispensing proper.

This operation envisages setting the member 22 in its second position, where the recesses 42 are aligned with the outlet mouths 16 so that the latter are set in communication with the chambers 26. At this point, the pistons of the aforesaid chambers are moved towards the member 22, thus pushing the cream out of the device, through the outlet mouths 16.

The amount of cream dispensed is regulated through the stroke performed by the pistons.

To return now to the drawback mentioned above with reference to the prior art, it should be noted that in the device described herein the recesses 40 and 42 are so superficial that they do not offer sufficient space for accumulation of residue of the granular material possibly contained in the cream. Moreover, these recesses may be made in positions very close to one another so that the movement that the member 22 has to make is in practice very limited. All this contributes, as a whole, to eliminating the risk of jamming of the device practically altogether.

In the ultimate analysis, the device described herein is simpler and at the same time more reliable as compared to the devices of the prior art.

## Claims

1. A device for dispensing confectionery creams, comprising:
- at least one inlet (14) and one outlet (16);
- at least one chamber (26) for collecting the cream,
wherein a piston is mobile within said chamber, in a first direction for intake of cream into said device, through said inlet (14), and in a second, opposite, direction for delivery of said cream through said outlet (16); and
- a cylindrical valve member (22), set within a corresponding cylindrical seat (18), which may be configured between a first condition, in which said at least one chamber (26) is set in communication with said at least one inlet (14) and is instead isolated from said at least one outlet, and a second condition, in which said at least one chamber (26) is set in communication with said at least one outlet (16) and is isolated from said at least one inlet (14),
said device being **characterized in that** said valve member (22) carries on its outer surface a first series of recesses (40), which are configured to set said at least one chamber (26) in communication with said at least one inlet (14), and a second series of recesses (42), distinct from said first series, which are configured to set said at least one chamber (26) in communication with said at least one outlet (16), wherein the recesses (42) of said second series are made in positions along the geometrical axis of said member (22) that are different from the positions of the recesses (40) of said first series,
and wherein said member (22) is mobile according to a movement of translation along its own geometrical axis, between a first position, in which said first series of recesses is set in communication with said at least one chamber (26), and a second position, in which said second series of recesses (42) is set in communication with said at least one chamber (26).

2. The device according to Claim 1, wherein said recesses (40, 42) extend in said member (22) down to a depth that does not reach the geometrical axis of said member (22).

3. The device according to Claim 2, wherein said recesses (40, 42) are obtained with a milling operation made along a cutting plane secant with respect to the circular cross section of said member (22).

4. The device according to any one of the preceding claims, wherein said inlet (14) and said outlet (16) are both aligned in a first direction (Zi), which is preferably vertical, and wherein said chamber extends in a second direction (Yi) orthogonal to said first direction.

5. The device according to Claim 4, wherein said recesses (40, 42) of said first and/or second series are obtained with a milling operation made along a cutting plane secant with respect to the circular cross section of said member, which is oriented in a direction substantially intermediate between said first and second directions, preferably at 45°.

6. The device according to Claim 4, wherein said seat (18) extends in a third direction (X) orthogonal to said first and second directions (Zi, Yi).

7. The device according to any one of the preceding claims, wherein the recesses (40) of said first series and the recesses (42) of said second series have different orientations about said geometrical axis.

8. The device according to Claim 4, wherein said recesses (40, 42) of said first and/or second series are obtained with a milling operation made along a cutting plane secant with respect to the circular cross section of said member, which is inclined with respect to said second direction by an angle (β), which is different for the recesses of said first series and the recesses of said second series, preferably said angle (β) being approximately +135° for the recesses of said first series and approximately -135° for the recesses of said second series.

## Patentansprüche

1. Einrichtung zum Abgeben von Süßwarencremes, umfassend:
- mindestens einen Einlass (14) und einen Auslass (16),
- mindestens eine Kammer (26) zum Sammeln der Creme,
wobei ein Kolben zur Aufnahme von Creme in die Einrichtung durch den Einlass (14) in einer ersten Richtung und zur Ausgabe der Creme durch den Auslass (16) in einer zweiten, entgegengesetzten Richtung in der Kammer bewegbar ist, und
- ein in einen entsprechenden zylindrischen Sitz (18) eingesetztes zylindrisches Ventilelement (22), das zwischen einem ersten Zustand, in dem die mindestens eine Kammer (26) mit dem mindestens einen Einlass (14) verbunden ist und dafür von dem mindestens einen Auslass getrennt ist, und einem zweiten Zustand verstellbar ist, in dem die mindestens eine Kammer (26) mit dem mindestens einen Auslass (16) verbunden ist und von dem mindestens einen Einlass (14) getrennt ist,
wobei die Einrichtung **dadurch gekennzeichnet ist, dass** das Ventilelement (22) auf seiner Außenfläche eine erste Reihe von Ausnehmungen (40), die dafür ausgelegt sind, die mindestens eine Kammer (26) mit dem mindestens einen Einlass (14) zu verbinden, und eine von der ersten Reihe verschiedene zweite Reihe von Ausnehmungen (42) trägt, die dafür ausgelegt sind, die mindestens eine Kammer (26) mit dem mindestens einen Auslass (16) zu verbinden,
wobei die Ausnehmungen (42) der zweiten Reihe auf Positionen entlang der geometrischen Achse des Elements (22) gefertigt sind, die sich von den Positionen der Ausnehmungen (40) der ersten Reihe unterscheiden, und wobei das Element (22) gemäß einer Translationsbewegung entlang seiner geometrischen Achse zwischen einer ersten Position, in der die erste Reihe von Ausnehmungen mit der mindestens einen Kammer (26) verbunden ist, und einer zweiten Position bewegbar ist, in der die zweite Reihe von Ausnehmungen (42) mit der mindestens einen Kammer (26) verbunden ist.

2. Einrichtung nach Anspruch 1, wobei sich die Ausnehmungen (40, 42) in dem Element (22) bis zu einer Tiefe herab erstrecken, welche die geometrische Achse des Elements (22) nicht erreicht.

3. Einrichtung nach Anspruch 2, wobei die Ausnehmungen (40, 42) mit einem Fräsvorgang entlang einer den kreisförmigen Querschnitt des Elements (22) schneidenden Schnittebene erhalten sind.

4. Einrichtung nach einem der vorhergehenden Ansprüche, wobei der Einlass (14) und der Auslass (16) beide in einer ersten Richtung (Zi) ausgerichtet sind, die bevorzugt vertikal verläuft, und wobei sich die Kammer in einer orthogonal zu der ersten Richtung verlaufenden zweiten Richtung (Yi) erstreckt.

5. Einrichtung nach Anspruch 4, wobei die Ausnehmungen (40, 42) der ersten und/oder zweiten Reihe mit einem Fräsvorgang entlang einer den kreisförmigen Querschnitt des Elements schneidenden Schnittebene erhalten sind, die in einer im Wesentlichen zwischen der ersten und zweiten Richtung, bevorzugt bei 45°, verlaufenden Richtung orientiert ist.

6. Einrichtung nach Anspruch 4, wobei sich der Sitz (18) in einer orthogonal zu der ersten und zweiten Richtung (Zi, Yi) verlaufenden dritten Richtung (X) erstreckt.

7. Einrichtung nach einem der vorhergehenden Ansprüche, wobei die Ausnehmungen (40) der ersten Reihe und die Ausnehmungen (42) der zweiten Reihe verschiedene Orientierungen um die geometrische Achse aufweisen.

8. Einrichtung nach Anspruch 4, wobei die Ausnehmungen (40, 42) der ersten und/oder zweiten Reihe mit einem Fräsvorgang entlang einer den kreisförmigen Querschnitt des Elements schneidenden Schnittebene erhalten sind, die in Bezug auf die zweite Richtung um einen Winkel (β) geneigt ist, der sich für die Ausnehmungen der ersten Reihe und die Ausnehmungen der zweiten Reihe unterscheidet, wobei der Winkel (β) bevorzugt für die Ausnehmungen der ersten Reihe ungefähr +135° und für die Ausnehmungen der zweiten Reihe ungefähr -135° beträgt.

## Revendications

1. Dispositif de distribution de crèmes de confiserie comprenant :
- au moins une entrée (14) et une sortie (16) ;
- au moins une chambre (26) pour collecter la crème,
dans lequel un piston est mobile à l'intérieur de ladite chambre, dans une première direction pour l'admission de crème dans ledit dispositif, à travers ladite entrée (14), et dans une deuxième direction opposée pour fournir ladite crème à travers ladite sortie (16) ; et
- un élément de soupape cylindrique (22), mis dans un siège cylindrique correspondant (18), qui peut être configuré entre un premier état, dans lequel ladite au moins une chambre (26) est mise en communication avec ladite au moins une entrée (14) et est au contraire isolée de ladite au moins une sortie, et un deuxième état, dans lequel ladite au moins une chambre (26) est mise en communication avec ladite au moins une sortie (16) et est isolée de ladite au moins une entrée (14),
ledit dispositif étant **caractérisé en ce que** ledit élément de soupape (22) porte sur sa surface extérieure une première série d'évidements (40), qui sont configurés pour mettre en communication ladite au moins une chambre (26) avec ladite au moins une entrée (14), et une deuxième série d'évidements (42), distincte de ladite première série, qui sont configurés pour mettre en communication ladite au moins une chambre (26) avec ladite au moins une sortie (16), où les évidements (42) de ladite deuxième série sont réalisés dans des positions le long de l'axe géométrique dudit élément (22) qui sont différentes des positions des évidements (40) de ladite première série,
et où ledit élément (22) est mobile selon un mouvement de translation le long de son propre axe géométrique, entre une première position, dans laquelle ladite première série d'évidements est mise en communication avec ladite au moins une chambre (26), et une deuxième position, dans laquelle ladite deuxième série d'évidements (42) est mise en communication avec ladite au moins une chambre (26).

2. Dispositif selon la revendication 1, dans lequel lesdits évidements (40, 42) s'étendent vers le bas dans ledit élément (22) jusqu'à une profondeur qui n'atteint pas l'axe géométrique dudit élément (22).

3. Dispositif selon la revendication 2, dans lequel lesdits évidements (40, 42) sont obtenus par une opération de fraisage réalisée le long d'un plan de découpe sécant par rapport à la section transversale circulaire dudit élément (22).

4. Dispositif selon l'une quelconque des revendications précédentes, dans lequel ladite entrée (14) et ladite sortie (16) sont toutes deux alignées dans une première direction (Zi), qui est de préférence verticale, et dans lequel ladite chambre s'étend dans une deuxième direction (Yi) orthogonale par rapport à ladite première direction.

5. Dispositif selon la revendication 4, dans lequel lesdits évidements (40, 42) de ladite/desdites première et/ou deuxième série(s) sont obtenus par une opération de fraisage réalisée le long d'un plan de découpe sécant par rapport à la section transversale circulaire dudit élément, qui est orienté dans une direction sensiblement intermédiaire entre lesdites première et deuxième directions, de préférence selon un angle de 45°.

6. Dispositif selon la revendication 4, dans lequel ledit siège (18) s'étend dans une troisième direction (X) orthogonale par rapport auxdites première et deuxième directions (Zi, Yi).

7. Dispositif selon l'une quelconque des revendications précédentes, dans lequel les évidements (40) de ladite première série et les évidements (42) de ladite deuxième série ont des orientations différentes autour dudit axe géométrique.

8. Dispositif selon la revendication 4, dans lequel lesdits évidements (40, 42) de ladite/desdites première et/ou deuxième série(s) sont obtenus par une opération de fraisage réalisée le long d'un plan de découpe sécant par rapport à la section transversale circulaire dudit élément, qui est incliné par rapport à ladite deuxième direction d'un angle (β), qui est différent pour les évidements de ladite première série et les évidements de ladite deuxième série, de préférence ledit angle (β) étant d'environ +135° pour les évidements de ladite première série et d'environ -135° pour les évidements de ladite deuxième série.
